# EUROPÄISCHE PATENTSCHRIFT

(11) **EP 2 754 219 B1**
(45) Veröffentlichungstag und Bekanntmachung des Hinweises auf die Patenterteilung: **28.06.2017**
(21) Anmeldenummer: 12756409.4
(22) Anmeldetag: 21.08.2012
(51) Int. Cl.: H02H 7/122, H02M 1/32, H02H 7/20

(54) **VERFAHREN UND ANORDNUNG ZUM ÜBERSPANNUNGSSCHUTZ VON WECHSELRICHTERN FÜR PHOTOVOLTAISCHE ANLAGEN**
METHOD AND ARRANGEMENT FOR THE SURGE PROTECTION OF INVERTERS FOR PHOTOVOLTAIC SYSTEMS
PROCÉDÉ ET DISPOSITIF DE PROTECTION CONTRE LES SURTENSIONS D'ONDULEURS POUR INSTALLATIONS PHOTOVOLTAÏQUES

(30) Priorität: 05.09.2011 DE 102011112474
(43) Veröffentlichungstag der Anmeldung: 16.07.2014
(73) Patentinhaber: Dehn + Söhne GmbH + Co. KG, 92318 Neumarkt/Opf. (DE)
(72) Erfinder: EHRLER, Jens, 92318 Neumarkt/Woffenbach (DE)
(74) Vertreter: Kruspig, Volkmar
(86) Internationale Anmeldenummer: PCT/EP2012/066252
(87) Internationale Veröffentlichungsnummer: WO 2013/034428

(56) Entgegenhaltungen:
- EP-A1- 2 187 510
- DE-A1-102008 050 543
- US-A1- 2010 295 377

## Beschreibung

Die Erfindung betrifft ein Verfahren und eine Anordnung zum Überspannungsschutz von Wechselrichtern für photovoltaische Anlagen, umfassend mindestens ein Überspannungsschutzgerät, welches räumlich im Wechselrichter integriert oder in dessen Nähe befindlich ist, wobei das mindestens eine Überspannungsschutzgerät mit der Gleichstromseite des Wechselrichters in Verbindung steht, gemäß Patentanspruch 1 bzw. 7.

Bei typischen Photovoltaikanlagen werden mehrere Photovoltaikmodule zu einem Photovoltaikstrang in Reihe geschaltet, um so eine für die Gleichspannungs-Wechselspannungs-(DC-AC)-Wandlung und anschließender Netzeinspannung geeignete Gleichspannung von einigen 100 bis 1000 bzw. 1500 V zu erreichen.

Der betreffende Photovoltaikstrang wird entweder direkt an einen Wechselrichter angeschlossen oder es werden mehrere Stränge, die einen möglichst gleichen Aufbau besitzen, parallel geschaltet und mit einem zentralen Wechselrichter verbunden.

Der Aufbau von Photovoltaikenergiesystemen ist in der DIN VDE 0100-712 (VDE 0100-712) geregelt, wobei entsprechende Anlagen einen oder mehrere Teilgeneratoren aufweisen können.

Maßgeblich für den sicheren Betrieb von DC-AC-Wechselrichtern ist u.a. ein ausreichender Überspannungsschutz für die elektronischen Komponenten des Wechselrichters einschließlich der dort befindlichen EMV-Schutzschaltungen.

Photovoltaik-Wechselrichter besitzen einen weiten MPP (Maximum-Power-Point)-Spannungsbereich z.B. typenabhängig zwischen 320 und 800 V mit einer maximalen Gleichspannung von 1000 V bzw. einer minimalen Gleichspannung von etwa 150 V.

In Abhängigkeit von der jeweiligen MPP-Spannung werden im Wechselrichter interne Stromwege geschaltet, wobei hierfür sogenannte Hochsetzsteller oder Tiefsetzsteller zum Einsatz kommen.

Aus der DE 40 32 569 C2 ist es bekannt, jedes Photovoltaikmodul mit einem integrierten Wechselrichter mit MPP-Tracking auszustatten. Ein solcher MPP-Tracker regelt die Spannung auf denjenigen Wert, bei dem das System bei maximaler Leistung, d.h. im MPP-Bereich arbeitet. Hierzu variiert der MPP-Tracker den entnommenen Strom um einen definierten Betrag, errechnet die momentane Leistung und stellt den Stromwert in Richtung höherer Leistung nach. Mittels einer Steuereinheit werden Signale an einen Datenbus gegeben, der diese Daten dem Leistungs- und Steuerteil zum Überprüfen der Funktionsfähigkeit des Moduls zuführt.

Die DE 199 04 561 C1 zeigt ein Verfahren und eine Schaltungsanordnung zur Maximum-Power-Point-Steuerung von Solargeneratoren. Gemäß der dortigen Lösung ist ein vom Solargenerator elektrisch isolierter Sensor vorhanden, wobei quasikontinuierlich die Stromkennlinie des Sensors in an sich bekannter Weise bestimmt wird. Aus der Stromkennlinie wird dann die Leistungskennlinie berechnet. Aus dem Maximum wird quasikontinuierlich eine Regelgröße für den Wandler abgeleitet. Eine diesbezügliche Schaltungsanordnung geht davon aus, dass als Sensor ein Solarmodul eingesetzt wird, welches vom gleichen Typ wie die im Solargenerator verwendeten Solarmodule ist, und dass zwischen Sensor und Wandlersteuerung eine Kennlinienmessung und ein Mikrorechner zur Ermittlung der Regelgröße des Wandlers eingeschaltet werden.

Wenn derartige Solargeneratoren mit Wechselrichtern in Verbindung stehen, die einer Maximum-Power-Point-Steuerung unterliegen, ergibt dies Vorteile hinsichtlich des Wirkungsgrads der gesamten Anlage. Unterschiedliche MPP-Spannungswerte, d.h. Spannungswerte, bei denen die größte Leistung abgegeben wird, stellen jedoch Schwierigkeiten bezüglich des notwendigen Überspannungsschutzes eines entsprechenden Wechselrichters dar. Dies deshalb, da Überspannungsschutzgeräte, wie z.B. Varistoren, Suppressordioden oder Funkenstrecken, konstruktions- bzw. wirkungsseitig bedingt eine definierte Ansprechspannung bzw. einen Ansprechspannungsbereich aufweisen. Ist beispielsweise der Überspannungsschutz auf eine maximale Gleichspannung von 1000 V eingestellt, liegt bei einem MPP-Spannungsbereich von z.B. 500 V nur eine unzureichende Schutzfunktion vor.

Aus der DE 10 2008 050 543 A1 und der EP 2 187 510 A1 sind Verfahren zum Überspannungsschutz von Wechselrichtern für photovoltaische Anlagen bekannt, die mindestens ein Überspannungsschutzgerät umfassen, das räumlich im Wechselrichter integriert oder in dessen Nähe befindlich ist, wobei das Überspannungsschutzgerät mit der Gleichstromseite des Wechselrichters in Verbindung steht. Der Wechselrichter liefert hierbei ein Signal zur Einstellung oder Nachführung des Arbeitspunkts auf einen Betrieb im Bereich des Maximum-Power-Point MPP. Gemäß den Lehren der beiden Druckschriften wird der Überspannungsschutz fest eingestellt, wobei die Einstellung an die maximale Spannungsfestigkeit der Elemente des Wechselrichters angelehnt ist. Der Schutz vor schnell ansteigenden Überspannungspulsen, ausgehend von den durch den MPP vorgegebenen niedrigeren Spannungen, ist bei den offenbarten Verfahren nicht effizient.

Aus dem Vorgenannten ist es daher Aufgabe der Erfindung, ein weiterentwickeltes Verfahren sowie eine zugehörige Anordnung zum Überspannungsschutz von Wechselrichtern für photovoltaische Anlagen anzugeben, umfassend mindestens ein Überspannungsschutzgerät oder eine Gruppe von Überspannungsschutzgeräten, welches bzw. welche räumlich im Wechselrichter integriert oder in dessen unmittelbarer Nähe befindlich ist, wobei das mindestens eine Überspannungsschutzgerät mit der Gleichstromseite des Wechselrichters in Verbindung steht. Aufgabengemäß soll der Überspannungsschutz sowohl im unteren als auch im oberen MPP-Bereich gleich wirksam und effektiv vorhanden sein, ohne dass je nach Einsatzfall händische Einstellungen oder dergleichen Manipulationen im Sinne des Austauschs entsprechender Überspannungsschutzgeräte erforderlich werden. Außerdem soll der Überspannungsschutz flexibel und automatisch an die Betriebsparameter des Wechselrichters anpassbar sein.

Die Lösung der Aufgabe der Erfindung erfolgt verfahrungsseitig mit der Lehre nach Patentanspruch 1 sowie mit einer Anordnung gemäß der Merkmalskombination nach Patentanspruch 7, wobei die Unteransprüche mindestens zweckmäßige Ausgestaltungen und Weiterbildungen darstellen.

Es wird demnach von einem Verfahren und einer Anordnung zum Überspannungsschutz von Wechselrichtern für photovoltaische Anlagen ausgegangen, umfassend mindestens eine Überspannungsschutzgeräteausbildung, welche räumlich bevorzugt im Wechselrichter integriert oder in dessen unmittelbarer Nähe befindlich ist. Das mindestens eine oder eine Gruppe von Überspannungsschutzgeräten ist mit der Gleichstromseite des Wechselrichters in Verbindung stehend, wobei diese Gleichstromseite an einem entsprechenden Strang einer Photovoltaikanlage angeschlossen ist.

Der DC-AC-Wechselrichter liefert ein Signal zur Einstellung oder Nachführung, d.h. Tracking, des Arbeitspunkts auf einen Betrieb im Bereich des Maximum-Power-Point (MPP). Erfindungsgemäß wird auf der Basis dieses Signals die Ansprechspannung des Überspannungsschutzgeräts vorgegeben, eingestellt oder gewählt.

Das erfindungsgemäß genutzte Signal ist ein Steuersignal, welches aus einer Vielzahl von Überspannungsschutzgeräten diejenigen aktiviert, welche die momentan gewünschte Ansprechspannung ergeben.

Die Vielzahl von Überspannungsschutzgeräten kann als Kaskade angeordnet sein, wobei die Aktivierung oder die Auswahl mittels Steuerung jeweils parallel geschalteter Schalteinrichtungen erfolgt.

Die Schalteinrichtungen können als elektromechanische Relais oder aber auch Halbleiterschalter ausgebildet werden.

Bei einer bevorzugten Ausführungsform der Erfindung ermittelt der im Wechselrichter vorhandene Prozessor auf der Basis der jeweiligen MPP-Spannung die jeweilige Ansprechspannung der Überspannungsschutzgeräte, welche im entsprechenden Betriebsfall eine optimale Absicherung bewirkt, wobei dann hiernach Überspannungsschutzgeräte hinzugeschaltet, abgetrennt und/oder kurzgeschlossen werden.

Zur Bereitstellung des Auswahlsignals für die Ansprechspannung des oder der Überspannungsableiter kann das MPP-Trackingsignal des Wechselrichters herangezogen werden.

Bei der Anordnung zum Überspannungsschutz von Wechselrichtern für photovoltaische Anlagen ist im Wechselrichter eine Gruppe von Überspannungsschutzgeräten derart elektrisch angeordnet und verschaltet, dass eine Anpassung der je nach Schaltzustand resultierenden Ansprechspannung an die MPP-Spannung möglich wird.

Ausgestaltend weist die Gruppe von Überspannungsschutzgeräten eine vorgegebene Anzahl von Varistoren, Suppressordioden und/oder Funkenstrecken auf, welche durch Kaskadierung auf verschiedene Ansprechspannungen im Sinne einer Programmierung schaltbar sind.

In einer weiteren Ausführungsform der Erfindung kann die Gruppe von Überspannungsschutzgeräten eine kombinierte Abtrenn- und Kurzschließvorrichtung aufweisen, um im Überspannungsteil eine Spannungsfreischaltung zu bewirken, um die Gefahr von Bränden oder weiteren Beschädigungen auszuschließen.

Die Erfindung soll nachstehend anhand eines Ausführungsbeispiels sowie unter Zuhilfenahme von Figuren näher erläutert werden.

Hierbei zeigen:
- Fig. 1: eine Prinzipdarstellung zur Erläuterung des erfindungsgemäßen Verfahrens zum Überspannungsschutz von Wechselrichtern und
- Fig. 2: eine Darstellung einer möglichen Kaskadierung von Überspannungsableitern mit parallel geschalteten Schalteinrichtungen zum Realisieren verschiedener, sich insgesamt an den äußeren Klemmen ergebenden Ansprechspannungen.

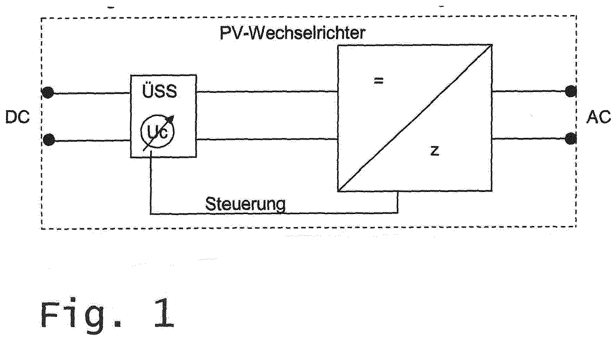

Gemäß der Darstellung nach Fig. 1 wird von einem gleichspannungsseitigen Eingang DC sowie einem wechselspannungsseitigen Ausgang AC ausgegangen. Der erfindungsgemäße PV-Wechselrichter enthält einen DC-Eingangsteil sowie einen AC-Ausgangsteil und Mittel zur Maximum-Power-Point-Steuerung bzw. zum sogenannten MPP-Tracking, so dass trotz unterschiedlicher Eingangsspannungen, z.B. bedingt durch verschiedene solare Einstrahlungsverhältnisse, eine jeweils optimale Leistung der Gesamtanlage sichergestellt werden kann.

Am gleichspannungsseitigen Eingangsbereich ist eine Überspannungsschutzbaugruppe ÜSS vorhanden, auf welche ein Steuersignal geführt wird. Dieses Steuersignal kann das Signal zur Einstellung oder Nachführung des Arbeitspunkts auf einen Betrieb im Bereich des Maximum-Power-Point sein, wobei auf der Basis dieses Signals die Ansprechspannung des Überspannungsschutzgeräts ÜSS vorgegeben, eingestellt oder gewählt wird.

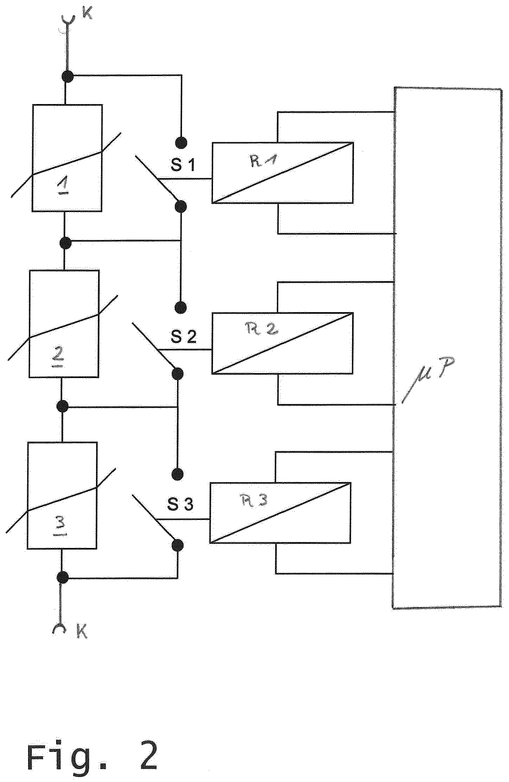

Eine einfache Steuerung ist beispielsweise die Kaskadierung von Überspannungsschutzeinheiten 1 bis 3, z.B. ausgebildet als Metalloxid-Varistoren (MOV) mit parallelen Schaltern S1, S2 und S3, die jeweils von einem zugehörigen Relais R1, R2 und R3 angesteuert werden gemäß Darstellung nach Fig. 2.

Je nach Schaltzustand der Schalter S1 bis S3 ergibt sich an den Klemmen K eine definierte Ansprechspannung aus den Teilansprechspannungen der MOVs 1 bis 3.

Die Ansteuerung der Relais kann z.B. mit Hilfe eines im Wechselrichter vorhandenen Prozessors vorgenommen werden, welcher auf der Basis der jeweiligen MPP-Spannung die jeweilige Ansprechspannung der Überspannungsschutzgeräte ermittelt und hiernach die entsprechenden Schaltvorgänge wie Kurzschließen, Abtrennen oder Hinzuschalten auslöst.

## Patentansprüche

1. Verfahren zum Überspannungsschutz von Wechselrichtern (PV-Wechselrichter) für photovoltaische Anlagen, umfassend mindestens ein Überspannungsschutzgerät (ÜSS), welches räumlich im Wechselrichter (PV-Wechselrichter) integriert oder in dessen Nähe befindlich ist, wobei das mindestens eine Überspannungsschutzgerät (ÜSS) mit der Gleichstromseite (DC) des Wechselrichters (PV-Wechselrichter) in Verbindung steht, und der Wechselrichter (PV-Wechselrichter) ein Signal zur Einstellung oder Nachführung seines Arbeitspunkts auf einen Betrieb der photovoltaischen Anlage im Maximum-Power-Point, dem MPP, liefert,
**dadurch gekennzeichnet, dass**
auf der Basis dieses Signals die Ansprechspannung des Überspannungsschutzgeräts (ÜSS) vorgegeben, eingestellt oder gewählt wird.

2. Verfahren nach Anspruch 1,
**dadurch gekennzeichnet, dass**
das Signal ein Steuersignal ist, welches aus einer Vielzahl von Überspannungsschutzgeräten (1, 2, 3) diejenigen aktiviert, welche die gewünschte Ansprechspannung ergeben.

3. Verfahren nach Anspruch 2,
**dadurch gekennzeichnet, dass**
die Vielzahl von Überspannungsschutzgeräten (1, 2, 3) als Kaskade angeordnet ist, wobei die Aktivierung oder Auswahl mittels Steuerung jeweils parallel geschalteter Schalteinrichtungen (S1, S2, S3) erfolgt.

4. Verfahren nach Anspruch 3,
**dadurch gekennzeichnet, dass**
die Schalteinrichtungen als Relais oder Halbleiterschalter ausgebildet sind.

5. Verfahren nach einem der vorangegangenen Ansprüche,
**dadurch gekennzeichnet, dass**
der im Wechselrichter vorhandene Prozessor auf der Basis der jeweiligen MPP-Spannung die jeweilige Ansprechspannung der Überspannungsschutzgeräte ermittelt und hiernach Überspannungsschutzgeräte (1, 2, 3) hinzugeschaltet, abgetrennt und/oder kurzgeschlossen werden.

6. Verfahren nach einem der vorangegangenen Ansprüche,
**dadurch gekennzeichnet, dass**
zur Bereitstellung des Auswahlsignals für die Ansprechspannung des oder der Überspannungsableiter ein MPP-Trackingsignal herangezogen wird.

7. Anordnung zum Überspannungsschutz von Wechselrichtern (PV-Wechselrichter) für photovoltaische Anlagen, umfassend einen Wechselrichter (PV-Wechselrichter) und mindestens ein Überspannungsschutzgerät (ÜSS), welches räumlich im Wechselrichter (PV-Wechselrichter) integriert oder in dessen Nähe befindlich ist, wobei das mindestens eine Überspannungsschutzgerät (ÜSS) mit der Gleichstromseite (DC) des Wechselrichters (PV-Wechselrichter) in Verbindung steht und der Wechselrichter (PV-Wechselrichter) ein Signal zur Einstellung oder Nachführung seines Arbeitspunktes auf einen Betrieb der photovoltaischen Anlage im Maximum-Power-Point, dem MPP, bereitstellt,
**dadurch gekennzeichnet, dass**
im Wechselrichter (PV-Wechselrichter) eine Gruppe von Überspannungsschutzgeräten (1, 2, 3) derart elektrisch angeordnet und mit parallelen Schaltern (S1, S2, S3) versehen ist, dass eine Anpassung der je nach Schaltzustand der Schalter (S1, S2, S3) resultierenden Ansprechspannung der Überspannungsschutzgeräte (1; 2; 3) an das Signal zur Einstellung oder Nachführung des Arbeitspunktes auf einen Betrieb im Bereich des Maximum-Power-Point (MPP) erfolgt.

8. Anordnung nach Anspruch 7,
**dadurch gekennzeichnet, dass**
die Gruppe von Überspannungsschutzgeräten (1, 2, 3) eine vorgegebene Anzahl von Varistoren, Suppressordioden und/oder Funkenstrecken aufweist, welche durch Kaskadierung auf verschiedene Ansprechspannungen schaltbar sind.

9. Anordnung nach Anspruch 7 oder 8,
**dadurch gekennzeichnet, dass**
die Gruppe von Überspannungsschutzgeräten (1, 2, 3) eine kombinierte Abtrenn- und Kurzschließvorrichtung aufweisen.

## Claims

1. A method for the surge protection of inverters (PV inverters) for photovoltaic systems, comprising at least one surge protection device (ÜSS) which is spatially integrated in the inverter (PV inverter) or located in its proximity, wherein the at least one surge protection device (ÜSS) is in communication with the inverter's (PV inverter's) direct current (DC) side, and the inverter (PV inverter) provides a signal for setting or readjusting its operating point to an operation of the photovoltaic system in the Maximum Power Point, the MPP,
**characterized in that**
the response voltage of the surge protection device (ÜSS) is prescribed, set or selected based on this signal.

2. The method according to claim 1,
**characterized in that**
the signal is a control signal activating those from a plurality of surge protection devices (1, 2, 3) which produce the desired response voltage.

3. The method according to claim 2,
**characterized in that**
the plurality of surge protection devices (1, 2, 3) is arranged as a cascade, wherein the activating or selecting is performed by controlling respective switching devices (S1, S2, S3) connected in parallel.

4. The method according to claim 3,
**characterized in that**
the switching devices are implemented as relays or semiconductor switches.

5. The method according to any one of the preceding claims,
**characterized in that**
the processor present in the inverter determines the respective response voltage of the surge protection devices based on the respective MPP voltage, and following this, surge protection devices (1, 2, 3) are connected in addition, cut-off and/or shortcircuited.

6. The method according to any one of the preceding claims,
**characterized in that**
an MPP tracking signal is used for providing the selecting signal for the response voltage of the surge arrester(s).

7. An arrangement for the surge protection of inverters (PV inverters) for photovoltaic systems, comprising an inverter (PV inverter) and at least one surge protection device (ÜSS) which is spatially integrated in the inverter (PV inverter) or located in its proximity, wherein the at least one surge protection device (ÜSS) is in communication with the inverter's (PV inverter's) direct current (DC) side, and the inverter (PV inverter) provides a signal for setting or readjusting its operating point to an operation of the photovoltaic system in the Maximum Power Point, the MPP,
**characterized in that**
in the inverter (PV inverter), a set of surge protection devices (1, 2, 3) is electrically arranged and provided with parallel switches (S1, S2, S3) in such a manner that an adaptation of the surge protection devices' (1; 2; 3) response voltage, resulting as a function of the switches' (S1, S2, S3) switching state, to the signal for setting or readjusting the operating point to an operation in the range of the Maximum Power Point (MPP) is performed.

8. The arrangement according to claim 7,
**characterized in that**
the set of surge protection devices (1, 2, 3) comprises a defined number of varistors, suppressor diodes and/or spark gaps which are switchable to different response voltages by means of cascading.

9. The arrangement according to claim 7 or 8,
**characterized in that**
the set of surge protection devices (1, 2, 3) comprises a combined cutting-off and short-circuiting device.

## Revendications

1. Procédé pour la protection antisurtension d'onduleurs (onduleurs PV) pour installations photovoltaïques, incluant au moins un appareil de protection antisurtension, qui est intégré dans l'espace dans l'onduleur (onduleur PV) ou se trouve dans son voisinage, dans lequel ledit au moins un appareil de protection antisurtension est connecté au côté à courant continu de l'onduleur (onduleur PV), et l'onduleur (onduleur PV) fournit un signal pour le réglage ou pour le suivi de réglage de son point de travail à un fonctionnement de l'installation photovoltaïque au niveau du point de puissance maximum (MPP),
**caractérisé en ce que** la tension de réaction de l'appareil de protection antisurtension est prédéterminée, réglée ou sélectionnée sur la base de ce signal.

2. Procédé selon la revendication 1,
**caractérisé en ce que** le signal est un signal de commande qui, parmi une pluralité d'appareils de protection antisurtension (1, 2, 3), active ceux qui donne en résultat la tension de réaction souhaitée.

3. Procédé selon la revendication 2,
**caractérisé en ce qu'**une pluralité d'appareils de protection antisurtension (1, 2, 3) sont agencés sous forme de cascade, et l'activation ou la sélection a lieu au moyen de la commande de dispositifs de commutation (S1, S2, S3) branchés respectivement en parallèle.

4. Procédé selon la revendication 3,
**caractérisé en ce que** les dispositifs de commutation sont réalisés sous forme de relais ou de commutateurs à semi-conducteur.

5. Procédé selon l'une des revendications précédentes,
**caractérisé en ce que** le processeur présent dans l'onduleur détermine, sur la base de la tension du point de puissance maximum, la tension de réaction respective des appareils de protection antisurtension et selon celle-ci, met en service, isole et/ou met en court-circuit des appareils de protection antisurtension (1, 2, 3).

6. Procédé selon l'une des revendications précédentes,
**caractérisé en ce que** pour la préparation du signal de sélection pour la tension de réaction du ou des dérivateurs de surtension, on utilise un signal de suivi du point de puissance maximum.

7. Agencement pour la protection antisurtension d'onduleurs (onduleurs PV) pour installations photovoltaïques, incluant un onduleur (onduleur PV) et au moins un appareil de protection antisurtension, qui est intégré dans l'espace dans l'onduleur (onduleur PV) ou qui se trouve à sa proximité, dans lequel ledit au moins un appareil de protection antisurtension est connecté avec le côté à courant continu (DC) de l'onduleur (onduleur PV), et l'onduleur (onduleur PV) prépare un signal pour le réglage ou pour le suivi du réglage de son point de travail à un fonctionnement de l'installation photovoltaïque au point de puissance maximum (MPP),
**caractérisé en ce que**, dans l'onduleur (onduleur PV), un groupe d'appareils de protection antisurtension (1, 2, 3) sont agencés sur le plan électrique et sont dotés de commutateurs parallèles (S1, S2, S3) de telle façon qu'il en résulte un ajustement de la tension de réaction, résultant selon l'état de commutation des commutateurs (S, S2, S3), des appareils de protection antisurtension (1, 2, 3) au signal pour le réglage ou le suivi du réglage du point de fonctionnement à un fonctionnement dans la région du point de puissance maximum (MPP).

8. Agencement selon la revendication 7,
**caractérisé en ce que** le groupe d'appareils de protection antisurtension (1, 2, 3) comprend un nombre prédéterminé de varistors, de diodes de suppression et/ou d'éclateurs, qui peuvent être commutés, par mise en cascade, sur des tensions de réaction différentes.

9. Agencement selon la revendication 7 ou 8,
**caractérisé en ce que** le groupe d'appareils de protection antisurtension (1, 2, 3) comprend un dispositif d'isolation et de mise en court-circuit combiné.
